(19) Europäisches Patentamt

European Patent Office

Office européen des brevets

(11) **EP 1 215 890 A1**

(12) **DEMANDE DE BREVET EUROPEEN**

(43) Date de publication:
**19.06.2002 Bulletin 2002/25**

(51) Int Cl.$^7$: **H04N 3/15**

(21) Numéro de dépôt: **01403130.6**

(22) Date de dépôt: **05.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.12.2000 FR 0015899**

(71) Demandeur: **COMMISSARIAT A L'ENERGIE ATOMIQUE**
**75752 Paris Cédex 15 (FR)**

(72) Inventeurs:
• **Audebert, Patrick**
  **38760 Varces (FR)**
• **Pantigny, Philippe**
  **38640 Claix (FR)**
• **Mottin, Eric**
  **38950 Saint Martin le Vinoux (FR)**

(74) Mandataire: **Signore, Robert**
**c/o BREVATOME**
**3, rue du Docteur Lanceraux**
**75008 Paris (FR)**

(54) **Circuit de lecture de charges par calibration et procédé de lecture de charges par calibration**

(57) L'invention concerne un circuit de lecture de charges comprenant des moyens de stockage de charges (Tc), des moyens d'adressage de charges (Ta) et des moyens de conversion charges/tension (A$_j$) comprenant une capacité de conversion, les moyens d'adressage permettant de contrôler l'injection, dans les moyens de conversion, de charges stockées dans les moyens de stockage. Le circuit comprend des moyens de calibration (Tc$_{cal}$, Ta$_{cal}$, I1, C$_{cal}$) pour délivrer une information (V$_s$) représentative de la charge stockée dans les moyens de stockage et des moyens (K, I2) pour sélectionner la capacité de conversion à partir de ladite information.

L'invention s'applique à la lecture de charges issues de la détection de rayonnements aux longueurs d'onde de l'infrarouge, du visible ou des rayons X.

FIG. 2

## Description

Domaine technique et art antérieur

L'invention concerne un circuit de lecture de charges ainsi qu'un procédé de lecture de charges.

Plus particulièrement, l'invention concerne un dispositif de lecture de charges issues de la détection d'un rayonnement par une matrice de N x M détecteurs élémentaires ainsi qu'un procédé de lecture de charges mis en oeuvre par un tel dispositif de lecture.

Les rayonnements détectés peuvent être, par exemple, des rayonnements aux longueurs d'ondes de l'infrarouge, du visible ou des rayons X. La lecture d'un circuit détecteur agencé sous forme d'une matrice de N lignes par M colonnes de détecteurs élémentaires s'effectue par balayage, ligne par ligne ou colonne par colonne.

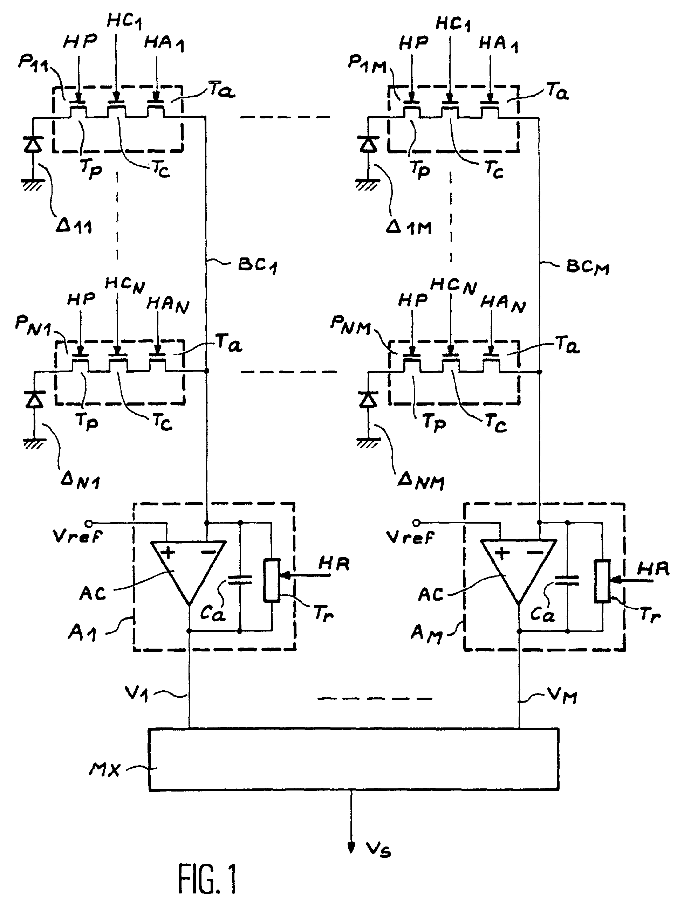

La figure 1 représente un dispositif de détection de rayonnement selon l'art antérieur.

Le dispositif de détection comprend N x M détecteurs élémentaires $\Delta_{ij}$ (i=1, ..., N ; j=1,..., M), N x M points élémentaires $P_{ij}$, M bus colonne $BC_j$, M amplificateurs de charges $A_j$ et un circuit de multiplexage MX. Chaque point élémentaire $P_{ij}$ comprend un transistor Tp pour adapter l'impédance du détecteur élémentaire $\Delta_{ij}$ au circuit de lecture, un transistor Tc d'intégration et un transistor Ta d'adressage.

Le détecteur $\Delta_{ij}$ est, par exemple, un détecteur photovoltaïque de type N sur substrat P. Le transistor Tp est un transistor NMOS monté en grille commune et dont la source et le drain sont respectivement connectés au détecteur et à la source du transistor NMOS d'intégration Tc.

Ce type d'architecture de circuit de lecture est communément désigné par architecture de type SCA (l'acronyme SCA provient de l'anglais « Snapshot Charge Amplifier »).

Un signal d'horloge HP appliqué à la grille de tous les transistors Tp définit le temps de prise de vue.

La fonction d'intégration est ici réalisée au moyen du transistor NMOS Tc dont la source et le drain sont reliés, d'une part, au drain du transistor Tp et, d'autre part, à la diode d'entrée du transistor NMOS d'adressage Ta. Dans certains cas, la source et le drain de Tc peuvent être court-circuités.

Un même signal d'horloge $HC_i$ (i=1, ..., N) est appliqué sur la grille de tous les transistors Tc d'une même ligne. Chaque ligne du circuit de lecture est attaquée par un signal d'horloge $HC_i$ différent.

Le transistor NMOS d'adressage Ta est monté en interrupteur entre le drain du transistor Tc et la connexion au bus colonne $BC_j$.

Un même signal d'horloge $HA_i$ (i=1, ..., N) est appliqué sur la grille des transistors Ta d'une même ligne. Chaque ligne du circuit de lecture est attaquée par un signal d'horloge $HA_i$ différent.

L'amplificateur de charges $A_j$ (j=1, ..., M) com-prend un amplificateur différentiel AC, un condensateur Ca et un transistor Tr.

Le bus colonne $BC_j$ relie la sortie des points élémentaires $P_{ij}$ d'une même colonne à l'entrée inverseuse de l'amplificateur différentiel AC dont l'entrée non-inverseuse est reliée à une alimentation Vref.

La capacité Ca et le transistor Tr sont montés en parallèle entre l'entrée inverseuse et la sortie de l'amplificateur différentiel AC. Le transistor Tr est utilisé comme interrupteur pour réinitialiser la capacité Ca entre la lecture de deux lignes consécutives. La grille du transistor Tr est pilotée par un signal d'horloge HR. Une tension $V_j$ est recueillie en sortie de l'amplificateur différentiel AC.

Les paquets de charges des points élémentai-res $P_{ij}$ d'une même ligne de rang i sont convertis simultanément en tension par l'ensemble des amplificateurs de charges $A_j$ placés à l'extrémité des bus colonne.

Les tensions $V_j$ recueillies en sortie des amplificateurs de charges sont appliquées sur les différentes entrées d'un multiplexeur en tension MX à M entrées et une sortie. La tension $V_s$ recueillie en sortie du multiplexeur MX prend alors pour valeur les valeurs succes-sives des tensions $V_j$ (j=1, ..., M).

Lorsqu'une conversion charges-tension relative à une ligne de détecteurs a été effectuée, les amplificateurs de charges sont réinitialisés afin de permettre la conversion charges-tension d'une ligne suivante.

Un inconvénient d'une structure telle que décrite ci-dessus est de générer un niveau élevé de bruit.

Dans l'hypothèse d'un bruit blanc, l'amplificateur de charges présente, aux fréquences situées dans sa bande passante, un facteur d'amplification relatif à sa tension de bruit intrinsèque qui est donné par la for-mule suivante:

$$G = ((C_{in} + C_a) / C_a)^{1/2}, \text{ où}$$

$C_{in}$ est une capacité parasite ramenée sur l'entrée inverseuse de l'amplificateur de charges, et Ca est la capacité de conversion de l'amplificateur de conversion charges/tension.

La capacité parasite $C_{in}$ est proportionnelle au nombre de lignes de la matrice de détecteurs ainsi qu'au pas qui sépare deux détecteurs d'une même ligne et la capacité Ca est liée à la charge maximale intégrable dans un point élémentaire. Par ailleurs, le courant de fonctionnement des amplificateurs de charges est limité par la consommation imposée au circuit.

Il s'ensuit que le niveau de bruit du circuit de lecture est fonction de paramètres imposés par le cahier des charges. C'est en particulier le cas de composants de grande complexité (par exemple comprenant 640 x 480 points élémentaires), pour lesquels la puissance dissipée par les amplificateurs de charges est une des principales sources de consommation. Il n'est donc pas possible, selon l'art connu, de réaliser des dispositifs de lecture de grand format ayant de bonnes performances en bruit.

Il apparaît ainsi que les architectures de type SCA de grande complexité sont limitées en performance de bruit. Ces limitations sont, par ailleurs, amplifiées pour des applications ayant une grande dynamique de scène à traiter, comme cela est mis en évidence, ci-dessous, à titre d'exemple, pour un senseur quantique d'image réalisé à partir de photodiodes HgCdTe hybridées sur un circuit CMOS et répondant au cahier des charges suivant :

- courant photonique maximum :

$$I_{ph}^{Max} = 2nA,$$

- durée de la prise d'image :

$$Ti = 1mS,$$

- tension de bruit rms équivalente ramenée en entrée de l'amplificateur de charges :

$$e_a = 80\mu V \ rms$$

- capacité parasite de bus colonne(capacité parasite vue sur l'entrée inverseuse de l'amplificateur) :

$$Cin = 4pF$$

- excursion maximale de sortie de l'amplificateur de charges : $\Delta Vs^{Max} = 2V$.

Pour un tel senseur d'image, la charge maximale qu'il est possible de stocker dans un point d'image élémentaire est :

$$Q_{PEL}^{Max} = I_{ph}^{Max} x Ti = 2pC$$

La capacité du condensateur de conversion charges/tension de l'amplificateur de charges peut donc s'écrire :

$$C_a = \frac{Q_{PEL}^{Max}}{\Delta Vs^{Max}} = 1pF$$

Le bruit équivalent $e_s$ en sortie de l'amplificateur de charges s'écrit donc :

$$e_s = G \ x \ e_a ,$$

où G est le facteur d'amplification mentionné plus haut.

Il vient donc ici :

$$e_s = 180\mu Vrms$$

Généralement, dans les senseurs quantiques, il est toléré que la chaîne de traitement dégrade d'un facteur $\sqrt{2}$ les performances de bruit des détecteurs sous flux minimum. Cela signifie que le bruit associé au circuit de lecture est au plus égal au bruit associé au détecteur sous conditions d'éclairement minimales.

Dans l'hypothèse de détecteurs photovoltaïques n'ayant qu'une source de bruit Schottky, il vient alors :

$$e_s = \sqrt{\frac{I_{ph}^{min} x Ti}{q}} x \frac{q}{C_a}$$

où $I_{ph}^{min}$ est le courant photonique minimum détectable. Il vient donc :

$$I_{ph}^{min} = \frac{(e_s x C_a)^2}{q x Ti}$$

Soit, ici :

$$I_{ph}^{min} = 200pA.$$

La dynamique maximale d'intensité que le circuit de lecture est capable de traiter est donc :

$$D = \frac{I_{ph}^{Max}}{I_{ph}^{min}} \ \#10$$

Dans certaines applications, cette dynamique n'est pas suffisante. Pour des scènes très contrastées, par exemple, une dynamique de 100 peut en effet s'avérer nécessaire.

Par ailleurs, selon l'art connu, la réponse en Volt/Coulomb du circuit de lecture est la même pour tous les points élémentaires. Cette réponse est donc de faible valeur pour des points élémentaires dont la charge détectée est de faible quantité. C'est le cas, en particulier, pour des images sous flux incident réduit lorsqu'il n'est pas possible d'augmenter le temps d'intégration (problème de cadence image et/ou bougé lors de la prise de vue). C'est également le cas lorsque la scène imagée présente un contraste très important : charge détectée proche de la saturation pour certaines photodiodes et très inférieure à la saturation pour d'autres. Une réponse de faible valeur en Volt/Coulomb se traduit alors par une plus grande sensibilité relative aux dérives du point de repos de la chaîne de multiplexage (sortie colonne vers sortie vidéo) et une moindre immunité aux bruits (couplages parasites) sur le signal vidéo.

L'invention ne présente pas les inconvénients mentionnés ci-dessus.

En effet l'invention concerne un circuit de lecture de charges comprenant des moyens de stockage de charges, des moyens d'adressage de charges et des moyens de conversion charges/tension comprenant une capacité de conversion, les moyens d'adressage permettant de contrôler l'injection, dans les moyens de conversion, de charges stockées dans les moyens de stockage. Le circuit comprend des moyens de calibration pour délivrer une information représentative de la charge stockée dans les moyens de stockage et des moyens pour sélectionner la capacité de conversion à partir de ladite information.

L'invention concerne également un dispositif de lecture de charges issues de la détection d'un rayonnement par une matrice de N lignes par M colonnes de détecteurs élémentaires, le dispositif de lecture comprenant un ensemble de N x M points élémentaires et des moyens de conversion charges/tension, chaque point élémentaire étant associé à un détecteur élémentaire et comprenant des moyens de stockage pour stocker les charges détectées par le détecteur élémentaire auquel il est associé et des moyens d'adressage pour contrôler l'injection, dans les moyens de conversion, des charges stockées dans les moyens de stockage, les moyens de conversion comprenant une capacité de conversion. Le dispositif est caractérisé en ce qu'un point élémentaire comprend des moyens de stockage de calibration pour stocker une fraction des charges stockées dans les moyens de stockage et au moins un moyen d'adressage de calibration pour contrôler l'injection, dans les moyens de conversion, des charges stockées dans les moyens de stockage de calibration et en ce que les moyens de conversion comprennent une première capacité de calibration pour convertir en une tension de calibration les charges adressées provenant des moyens de stockage de calibration et des moyens pour sélectionner la capacité de conversion à partir de la tension de calibration.

L'invention concerne également un procédé de lecture de charges comprenant successivement une étape de stockage de charges, une étape d'adressage de charges et une étape de conversion charges/tension, l'étape d'adressage permettant de contrôler l'injection, dans des moyens de conversion charges/tension comprenant une capacité de conversion, de charges stockées durant l'étape de stockage. Le procédé comprend une étape de calibration pour délivrer une information représentative de la charge stockée lors de l'étape de stockage et une étape de sélection de la capacité de conversion à partir de ladite information.

L'invention concerne encore un procédé de lecture de charges issues de la détection d'un rayonnement par une matrice de N lignes par M colonnes de détecteurs élémentaires, le procédé comprenant une étape de lecture des charges détectées par chaque détecteur élémentaire. L'étape de lecture des charges détectées par chaque détecteur élémentaire s'effectue par un procédé de lecture tel que le procédé selon l'invention mentionné ci-dessus.

Brève description des figures

D'autres caractéristiques et avantages de l'invention apparaîtront à la lecture d'un mode de réalisation préférentiel de l'invention fait en référence aux figures ci-annexées parmi lesquelles :

- la figure 1 représente un dispositif de lecture de charges de type SCA selon l'art antérieur,
- la figure 2 représente un dispositif de lecture de charges de type SCA selon l'invention,
- la figure 3 représente un perfectionnement du dispositif de lecture de charges de type SCA selon l'invention.

Description détaillée de mode de mise en oeuvre de l'invention

La figure 1 a été décrite précédemment, il est donc inutile d'y revenir.

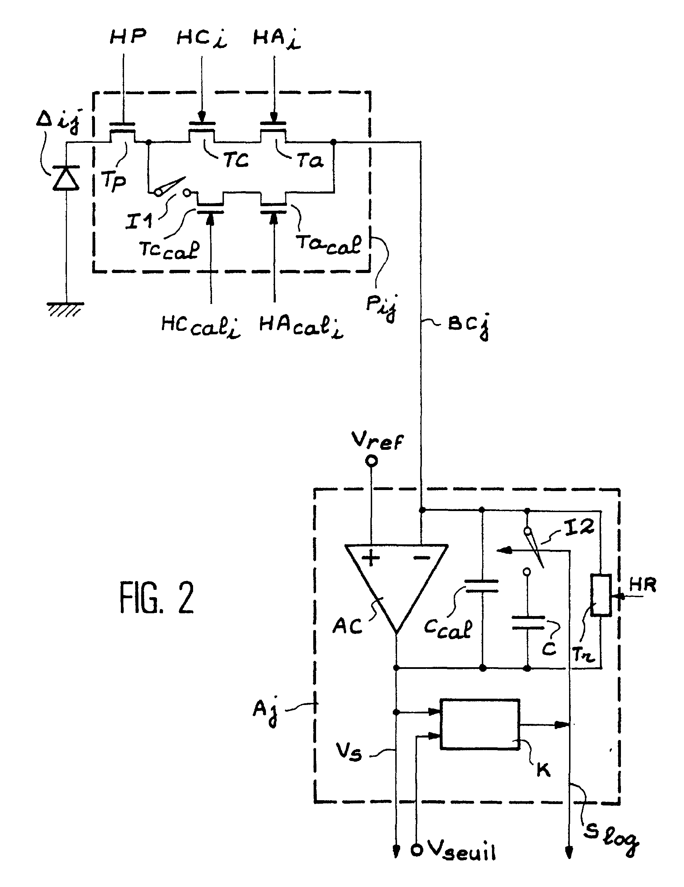

La figure 2 représente un dispositif de lecture de charges selon l'invention. Pour des raisons de simplicité, seuls sont représentés sur la figure 2 un détecteur élémentaire constitué d'une diode $\Delta_{ij}$ et d'un point élémentaire $P_{ij}$, un bus colonne $BC_j$ et un amplificateur de charges $A_j$. De façon plus générale, l'invention concerne cependant un dispositif de lecture agencé sous forme de matrice comprenant M x N détecteurs élémentaires.

Un point élémentaire selon l'invention comprend, outre les transistors Tp, Tc et Ta, au moins un circuit supplémentaire monté en parallèle des transistors Tc et Ta et constitué d'un interrupteur I1 et de deux transistors supplémentaires $Tc_{cal}$ et $Ta_{cal}$.

Un amplificateur de charges selon l'invention comprend un comparateur K, un amplificateur différentiel AC, une capacité de conversion $C_{cal}$ montée entre la sortie et l'entrée inverseuse de l'amplificateur différentiel AC et au moins un circuit supplémentaire monté en parallèle de la capacité $C_{cal}$ et constitué d'un interrupteur I2 et d'une capacité de conversion supplémentaire C. Un transistor Tr dont la grille est pilotée par un signal d'horloge HR est utilisé comme interrupteur pour réinitialiser la capacité d'intégration.

C'est à titre d'exemple non limitatif que le point élémentaire représenté en figure 2 ne comprend qu'un seul circuit supplémentaire monté en parallèle des transistors Tc et Ta et que l'amplificateur de charge ne comprend qu'un seul circuit supplémentaire monté en parallèle de la capacité $C_{cal}$.

Lorsque l'interrupteur I1 est fermé, le courant photonique délivré par la diode $\Delta_{ij}$ attaque le canal des deux transistors MOS d'intégration Tc et $Tc_{cal}$. L'interrupteur II permet de contrôler l'intégration dans le transistor $Tc_{cal}$. Il empêche le retour arrière des charges stockées dans le transistor $Tc_{cal}$ lors de la lecture du point élémentaire. Les transistors Ta et $Ta_{cal}$ permettent de contrôler l'injection des charges stockées respectivement dans les transistors Tc et $Tc_{cal}$ selon le principe du SCA.

Le bus colonne $BC_j$ attaque l'entrée inverseuse de l'amplificateur de charge $A_j$ dont l'entrée non-inverseuse est reliée à une tension de référence $V_{ref}$. Le condensateur C est connecté en parallèle du condensateur $C_{cal}$ au moyen de l'interrupteur I2. L'interrupteur I2 est commandé par un signal logique de comparaison $S_{log}$ issu du comparateur K. Le signal logique $S_{log}$ est issu de la comparaison de la tension $V_s$ prise en sortie de l'amplificateur différentiel AC avec une tension de seuil $V_{seuil}$.

La prise de vue s'effectue par intégration simultanée des charges détectés dans les transistors Tc et $Tc_{cal}$ (l'interrupteur I1 est en position fermée). La capacité d'intégration du point élémentaire $P_{ij}$ est alors la somme de la capacité d'intégration présentée par le transistor Tc et de la capacité d'intégration présentée par le transistor $Tc_{cal}$.

Une fois la prise de vue effectuée, la lecture de la charge stockée dans le point élémentaire est réalisée selon deux phases successives.

Dans une première phase, l'interrupteur I2 étant ouvert, seule la charge $Q_{cal}$ stockée dans le transistor $Tc_{cal}$ est injectée dans la capacité de conversion $C_{cal}$ de l'amplificateur $A_j$, réinitialisée auparavant par Tr. Des signaux d'horloge $HA_{cali}$ et $HC_{cali}$ sont alors appliqués sur les grilles des transistors respectifs $Ta_{cal}$ et $Tc_{cal}$ pour autoriser le transfert de la charge $Q_{cal}$. La variation $\Delta V^{max}_{conv}$ de la tension de sortie $V_s$ de l'amplificateur $A_j$ est alors donnée par la relation :

$$\Delta V^{max}_{conv} = Q_{cal}/C_{cal}.$$

Cette variation de tension constitue une mesure représentative de la charge totale stockée dans le point élémentaire. Si la variation de tension $\Delta V^{max}_{conv}$ porte la tension $V_s$ à une valeur supérieure à la tension de seuil $V_{seuil}$, le comparateur K délivre un signal logique de comparaison $S_{log}$ qui commande la fermeture de l'interrupteur I2. La capacité de contre-réaction de l'amplificateur $A_j$ est alors constituée par les condensateurs C et $C_{cal}$ en parallèle. Dans le cas contraire, l'interrupteur I2 n'est pas refermé et seul le condensateur $C_{cal}$ reste connecté en contre-réaction.

Dans une deuxième phase, le signal d'horloge $HA_i$ appliqué sur la grille du transistor Ta et associé au signal d'horloge $HC_i$ appliqué sur la grille du transistor Tc autorise le transfert de la charge stockée dans le transistor Tc vers la capacité de contre-réaction de l'amplificateur $A_j$. La charge stockée dans le transistor Tc est alors transférée soit dans la seule capacité $C_{cal}$, soit dans les capacités $C_{cal}$ et C en parallèle.

L'information disponible en sortie de l'amplificateur $A_j$ est constituée de la tension de conversion $V_s$ délivrée par l'amplificateur différentiel AC et du signal de comparaison $S_{log}$ délivré par le comparateur K. Le signal $V_s$ seul ne permet pas de retrouver la valeur de la charge stockée. Pour retrouver la valeur de la charge stockée, il faut en effet connaître le calibre qui a été utilisé pour faire la mesure. Ce calibre est donné par le signal de comparaison $S_{log}$. La valeur de la charge stockée est alors calculée à partir de la tension de conversion $V_s$ et du signal de comparaison $S_{log}$.

En fait, pour une même valeur $V_s$, on peut remonter à deux valeurs de charges (l'une stockée sur $C_{cal}$ et l'autre stockée sur $C_{cal}$ et C) de valeurs très différentes. Ce mode de lecture est appliqué, ligne par ligne, à tous les points élémentaires de la colonne.

Selon le mode de réalisation de l'invention décrit ci-dessus, deux calibres de conversion sont utilisés pour la conversion charges/tension. De façon plus générale, l'invention concerne un dispositif de lecture de charges comprenant au moins P calibres de conversion, P étant un nombre supérieur ou égal à 2. Le comparateur K travaille alors sur P-1 niveaux.

Un exemple de réalisation de circuit de lecture selon l'invention va maintenant être décrit. Le circuit de lecture comprend :

- un transistor d'intégration Tc dont la valeur de la capacité d'intégration est égale à 9 x $C_{int}$/10,
- un transistor d'intégration supplémentaire $Tc_{cal}$ dont la valeur de la capacité d'intégration est égale à $C_{int}$/10,
- une capacité $C_{cal}$ dont la valeur est égale à $C_{ref}$/10, et
- une capacité C dont la valeur de capacité est égale à 9 x $C_{ref}$/10, la grandeur $C_{ref}$ étant une valeur de capacité de référence, par exemple égale à 1pF et $C_{int}$ étant du même ordre de grandeur.

Lorsque l'interrupteur I1 est fermé, la capacité totale d'intégration a donc pour valeur $C_{int}$. De même, lorsque l'interrupteur I2 est fermé, la capacité totale de conversion a pour valeur $C_{ref}$.

Supposons que la variation maximum de tension aux bornes de la capacité totale de lecture soit égale à 1 volt et que la tension de seuil du comparateur soit égale à 0,1 volt.

Si la photo-charge intégrée dans un point élémentaire développe une variation de tension inférieure à 0,1 volt, alors la tension sortie de l'amplificateur de charge $A_j$ est également inférieure à 0,1 volt à l'issue de la première phase. L'interrupteur I2 reste ouvert et la charge stockée dans le transistor d'intégration Tc est transmise dans la capacité $C_{cal}$. La conversion en tension est ainsi effectuée sur un calibre capacitif de valeur $C_{ref}/10$.

Si la photo-charge intégrée dans un point élémentaire développe une variation de tension supérieure à 0,1 volt, alors la tension de sortie de l'amplificateur de charge $A_j$ est également supérieure à 0,1 volt à l'issue de la première phase. L'interrupteur I2 se ferme et la charge stockée dans le transistor d'intégration Tc est transmise dans la capacité $C_{cal}+C$. La conversion en tension est ainsi effectuée sur un calibre capacitif de valeur $C_{ref}$.

En résumé, si la charge intégrée est inférieure à $C_{int}$ x 0,1 V, la réponse de l'amplificateur $A_j$ est égale à $[C_{ref}/10]^{-1}$ Volt/Coulomb et, si la charge intégrée est supérieure à $C_{int}$ x 0,1 V, la réponse de l'amplificateur $A_j$ est égale à $C_{ref}^{-1}$ Volt/Coulomb.

Entre les deux phases de conversion, l'amplificateur de charges peut-être ré-initialisé ou non, une ré-initialisation de l'amplificateur de charge conduisant à une perte de la charge Qcal.

La présence d'un calibre de grande sensibilité de conversion ($[C_{ref}/10]^{-1}$ Volt/Coulomb) permet avantageusement de traiter la détection de faibles quantités de charges correspondant à un faible courant photonique, par exemple un courant Iph inférieur à 200pA.

Dans le cas où le calibre de grande sensibilité de conversion est utilisé, le facteur d'amplification de bruit en sortie de l'amplificateur de charges s'écrit :

$$G = ((C_{in} + C_{cal})\,/C_{cal})^{1/2}.$$

Toutes choses égales par ailleurs (voir l'exemple numérique ci-dessus), le bruit équivalent $e_s$ en sortie de l'amplificateur de charges s'écrit alors :

$$e_s = 510\ \mu Vrms$$

Avantageusement, il apparaît ainsi que le signal est augmenté d'un facteur 10 [(C+Ccal)/Ccal] alors que le bruit de chaîne de traitement n'augmente que d'un facteur 2,8 (510/18O).

Dans l'hypothèse d'un détecteur photovoltaïque n'ayant qu'une source de bruit Schottky, la limitation de dynamique qu'il est possible de traiter avec le calibre de grande sensibilité se traduit par l'équation suivante :

$$I_{ph}^{min} = \frac{(e_s x Ccal)^2}{qxTi} \qquad (3)$$

Il vient donc :

$$I_{ph}^{min} = 8pA$$

La dynamique maximale que le circuit de lecture peut traiter s'écrit alors :

$$D = \frac{I_{ph}^{Max}}{I_{ph}^{min}} \quad \#120$$

Le calibre de forte sensibilité permet ainsi d'augmenter considérablement la dynamique de traitement d'une architecture de type SCA.

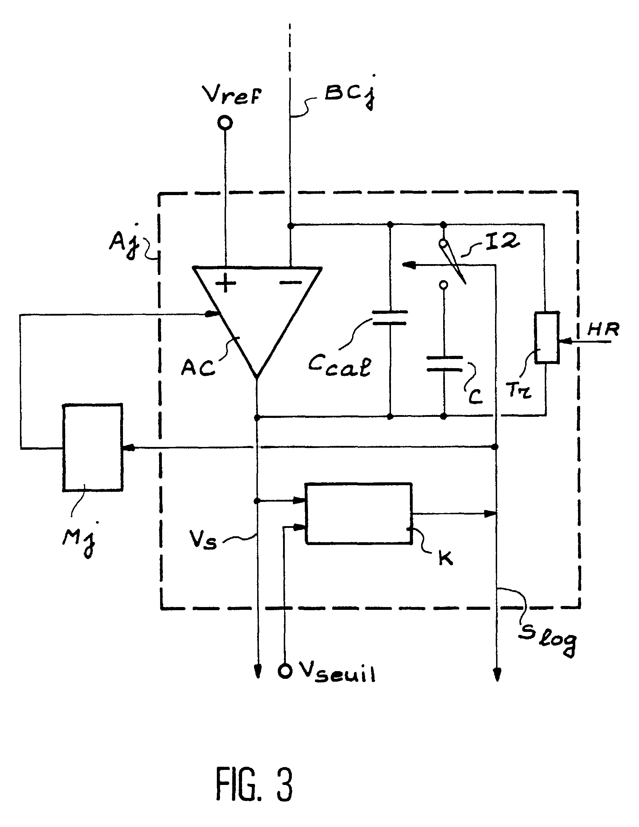

Comme représenté en figure 3, selon un perfectionnement de l'invention, le signal logique $S_{log}$ généré lors de la phase de calibration et servant à la sélection du calibre de conversion charges/tension peut également être utilisé pour ajuster le courant de repos de l'amplificateur de charges en fonction du paquet de charges à convertir. Le circuit de lecture selon l'invention comprend alors des moyens $M_j$ d'ajustage du courant de repos commandés par le signal logique de comparaison $S_{log}$.

Ceci permet d'optimiser la consommation des amplificateurs de charges du dispositif de lecture en fonction de la quantité de charges à convertir.

Si le courant de repos de l'amplificateur de charges est fixé à une valeur $I_1$ dans le cas où la tension Vs mesurée lors de la phase de calibration est inférieure à la tension de seuil $V_{seuil}$, il est alors possible de porter le courant de repos à une valeur $I_2$ supérieure à $I_1$ dans le cas où la tension Vs mesurée lors de la phase de calibration est supérieure à $V_{seuil}$.

**Revendications**

1. Circuit de lecture de charges comprenant des moyens de stockage de charges (Tc), des moyens d'adressage de charges (Ta) et des moyens de conversion charges/tension ($A_j$) comprenant une capacité de conversion, les moyens d'adressage permettant de contrôler l'injection, dans les moyens de conversion, de charges stockées dans les moyens de stockage, **caractérisé en ce qu'**il comprend des moyens de calibration (Tc$_{cal}$, Ta$_{cal}$, I1, C$_{cal}$) pour délivrer une information ($V_s$) représentative de la charge stockée dans les moyens de stockage et des moyens (K, I2) pour sélectionner la capacité de conversion à partir de ladite information.

2. Circuit de lecture de charges selon la revendication 1, **caractérisé en ce que** les moyens de calibration comprennent :

   - des moyens de stockage de calibration (Tc$_{cal}$) pour stocker une fraction des charges stockées dans les moyens de stockage,
   - des moyens d'adressage de calibration (Ta$_{cal}$) pour contrôler l'injection, dans les moyens de conversion ($A_j$), de la fraction de charges stockées dans les moyens de stockage de calibration, et

- une capacité de calibration ($C_{cal}$) pour convertir en une tension de calibration la charge adressée provenant des moyens de stockage de calibration ($Tc_{cal}$),

et **en ce que** les moyens pour sélectionner la capacité de conversion à partir de ladite information comprennent :

- un comparateur (K) pour délivrer un signal de comparaison ($S_{log}$) suite à la comparaison de la tension de calibration avec une tension de seuil ($V_{seuil}$), et
- au moins un interrupteur (I2) commandé par le signal de comparaison ($S_{log}$) pour connecter au moins une capacité supplémentaire (C) en parallèle de la capacité de calibration ($C_{cal}$) si la tension de calibration est supérieure à la tension de seuil de façon que la capacité de conversion soit constituée de la capacité de calibration et de la capacité supplémentaire.

3. Circuit de lecture de charges selon la revendication 2, **caractérisé en ce que** les moyens de conversion comprennent un amplificateur différentiel (AC) ayant une entrée inverseuse et une sortie, la capacité de calibration ($C_{cal}$) étant montée entre l'entrée inverseuse et la sortie de l'amplificateur différentiel (AC).

4. Circuit de lecture de charges selon la revendication 3, **caractérisé en ce qu'**il comprend des moyens de contrôle ($M_j$) d'un courant de repos de l'amplificateur différentiel (AC) commandés par le signal de comparaison.

5. Dispositif de lecture de charges issues de la détection d'un rayonnement par une matrice de N lignes par M colonnes de détecteurs élémentaires ($\Delta_{ij}$), le dispositif de lecture comprenant un ensemble de N x M points élémentaires ($P_{ij}$) et des moyens de conversion charges/tension ($A_j$), chaque point élémentaire étant associé à un détecteur élémentaire et comprenant des moyens de stockage (Tc) pour stocker les charges détectées par le détecteur élémentaire auquel il est associé et des moyens d'adressage (Ta) pour contrôler l'injection, dans les moyens de conversion, des charges stockées dans les moyens de stockage, les moyens de conversion comprenant une capacité de conversion, **caractérisé en ce qu'**un point élémentaire comprend des moyens de stockage de calibration ($Tc_{cal}$) pour stocker une fraction des charges stockées dans les moyens de stockage et des moyens d'adressage de calibration ($Ta_{cal}$) pour contrôler l'injection, dans les moyens de conversion, des charges stockées dans les moyens de stockage de calibration et **en**

**ce que** les moyens de conversion ($A_j$) comprennent une première capacité de calibration ($C_{cal}$) pour convertir en une tension de calibration les charges adressées provenant des moyens de stockage de calibration ($Tc_{cal}$) et des moyens pour sélectionner la capacité de conversion à partir de la tension de calibration.

6. Dispositif selon la revendication 5, **caractérisé en ce que** les moyens pour sélectionner la capacité de conversion comprennent un comparateur (K) pour délivrer un signal de comparaison ($S_{log}$) suite à la comparaison de la tension de calibration avec une tension de seuil ($V_{seuil}$) et au moins un interrupteur (I2) commandé par le signal de comparaison pour connecter une capacité supplémentaire en parallèle de la capacité de calibration si la tension de calibration est supérieure à la tension de seuil de façon que la capacité de conversion soit constituée de la capacité de calibration et de la capacité supplémentaire.

7. Dispositif de lecture de charges selon la revendication 6, **caractérisé en ce que** le circuit de conversion ($A_j$) comprend un amplificateur différentiel (AC) ayant une entrée inverseuse et une sortie, la capacité de calibration ($C_{cal}$) étant montée entre l'entrée inverseuse et la sortie.

8. Dispositif de lecture de charges selon la revendication 7, **caractérisé en ce qu'**il comprend des moyens de contrôle ($M_j$) d'un courant de repos de l'amplificateur différentiel (AC).

9. Procédé de lecture de charges comprenant une étape de stockage de charges, une étape d'adressage de charges et une étape de conversion charges/tension pour convertir une charge lue en une tension de conversion, l'étape d'adressage permettant de contrôler l'injection, dans des moyens de conversion charges/tension ($A_j$) comprenant une capacité de conversion ($C_{cal}$), de charges stockées durant l'étape de stockage, **caractérisé en ce qu'**il comprend une étape de calibration pour délivrer une information représentative de la charge stockée lors de l'étape de stockage et une étape de sélection de la capacité de conversion à partir de ladite information.

10. Procédé de lecture de charges selon la revendication 9, **caractérisé en ce que** l'étape de calibration comprend une étape de stockage de calibration pour stocker une fraction des charges stockées lors de l'étape de stockage, une étape d'adressage de calibration pour contrôler l'injection, dans les moyens de conversion ($A_j$), de la fraction de charges et une étape de conversion en une tension de calibration, à l'aide d'une capacité de calibration (Ccal), de la fraction de charges injectée dans les moyens de conversion et **en ce que** l'étape de sélection de la capacité de conversion comprend une étape de comparaison pour délivrer un signal de comparaison suite à la comparaison de la tension de calibration avec une tension de seuil et une étape de commande d'au moins un interrupteur (I2) pour connecter une capacité supplémentaire (C) en parallèle de la capacité de calibration si la tension de calibration est supérieure à la tension de seuil de façon que la capacité de conversion soit constituée de la capacité de calibration et de la capacité supplémentaire.

11. Procédé de lecture de charges selon la revendication 10, **caractérisé en ce que**, les moyens de conversion comprenant un amplificateur différentiel (AC), il comprend une étape de contrôle d'un courant de repos de l'amplificateur différentiel commandés par le signal de comparaison.

12. Procédé de lecture de charges selon l'une quelconque des revendications 10 ou 11, **caractérisé en ce qu'**il comprend une étape pour mesurer la valeur d'une charge lue à partir de la tension de conversion mesurée aux bornes de la capacité de conversion et du signal de comparaison ($S_{log}$).

13. Procédé de lecture de charges issues de la détection d'un rayonnement par une matrice de N lignes par M colonnes de détecteurs élémentaires, le procédé comprenant une étape de lecture des charges détectées par chaque détecteur élémentaire, **caractérisé en ce que** l'étape de lecture des charges détectées par chaque détecteur élémentaire s'effectue par un procédé selon l'une quelconque des revendications 9 à 12.

FIG. 1

FIG. 2

FIG. 3

**Office européen des brevets**

## RAPPORT DE RECHERCHE EUROPEENNE

Numéro de la demande

EP 01 40 3130

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 813 338 A (ROCKWELL INTERNATIONAL CORP) 17 décembre 1997 (1997-12-17) * colonne 6, ligne 56 - colonne 7, ligne 4 * | 1,5,9 | H04N3/15 |
| A | US 5 742 058 A (PANTIGNY PHILIPPE ET AL) 21 avril 1998 (1998-04-21) * colonne 10, ligne 55 - ligne 65; figure 6 * | 1,5,9 | |

DOMAINES TECHNIQUES RECHERCHES (Int.Cl.7)

H04N

Le présent rapport a été établi pour toutes les revendications

| Lieu de la recherche | Date d'achèvement de la recherche | Examinateur |
|---|---|---|
| LA HAYE | 20 mars 2002 | Bequet, T |

**ANNEXE AU RAPPORT DE RECHERCHE EUROPEENNE**
**RELATIF A LA DEMANDE DE BREVET EUROPEEN NO.**

EP 01 40 3130

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2002

| Document brevet cité au rapport de recherche | | Date de publication | Membre(s) de la famille de brevet(s) | | Date de publication |
|---|---|---|---|---|---|
| EP 0813338 | A | 17-12-1997 | US | 5892540 A | 06-04-1999 |
| | | | EP | 0813338 A2 | 17-12-1997 |
| | | | JP | 10065971 A | 06-03-1998 |
| US 5742058 | A | 21-04-1998 | FR | 2735632 A1 | 20-12-1996 |
| | | | DE | 69606098 D1 | 17-02-2000 |
| | | | DE | 69606098 T2 | 31-08-2000 |
| | | | EP | 0749233 A1 | 18-12-1996 |

EPO FORM P0460

Pour tout renseignement concernant cette annexe : voir Journal Officiel de l'Office européen des brevets, No.12/82